# EUROPÄISCHE PATENTSCHRIFT

(11) **EP 2 462 998 B1**
(45) Veröffentlichungstag und Bekanntmachung des Hinweises auf die Patenterteilung: **25.10.2017**
(21) Anmeldenummer: 11450151.3
(22) Anmeldetag: 09.12.2011
(51) Int. Cl.: A63C 11/04, B29C 59/04

(54) **Verfahren und Vorrichtung zum Bearbeiten einer Kunststoffgleitfläche, insbesondere einer Polyethylengleitfläche, von Gleiteinrichtungen wie beispielsweise Skier**
Method and device for treatment of a plastic sliding surface, in particular of a polyethylene sliding surface, of sliding devices like skis
Procédé et dispositif de traitement d'une surface de glissement plastique, notamment d'une surface de glissement en polyéthylène, des dispositifs de glissement comme des skies

(30) Priorität: 10.12.2010 AT 20472010
(43) Veröffentlichungstag der Anmeldung: 13.06.2012
(73) Patentinhaber: Stroi, Johann, 4912 Neuhofen im Innkreis (AT)
(72) Erfinder: Stroi, Johann, 4912 Neuhofen im Innkreis (AT)
(74) Vertreter: Keschmann, Marc

(56) Entgegenhaltungen:
- EP-A1- 0 631 841
- EP-A1- 1 415 686
- EP-A1- 1 685 880
- WO-A1-03/061783
- WO-A2-2011/044600
- AT-A1- 501 251
- DE-U1-202006 008 755
- FR-A1- 2 955 280

## Beschreibung

Die Erfindung betrifft ein Verfahren zum Bearbeiten einer Kunststoff- insbesondere Polyethylengleitfläche von Gleiteinrichtungen, wie z.B. Skier, mit einem rotierend antreibbaren Bearbeitungswerkzeug sowie eine Vorrichtung zur Durchführung des Verfahrens.

Wie die Praxis zeigt ist der Reibungskoeffizient zwischen zwei gleitenden Flächen oder Medien abhängig von der Oberflächenrauhigkeit und eventuellen Gleitmitteln. Glatte Flächen weisen in der Regel schlechte Gleiteigenschaften auf (Saugeffekt). Betrachtet man als Beispiel genauer den Vorgang des Gleitens von Gleitkörpern auf Schnee (Alpinski, Langlaufski, Sprungski, Snowboard, etc.) [Anmerkung: Laut Duden kann für die empfohlene Schreibweise 'Ski' auch die alternative Schreibweise 'Schi' verwendet werden], dann handelt es sich dabei um ein Zusammenspiel von mehreren Phänomenen. Nachdem man annimmt, dass es beim Gleitvorgang von Skiern auf Schnee zur Ausbildung eines mikroskopischen Wasserfilms kommt, stellt sich global gesehen folgende Energiebilanz des Systems Skilaufen auf Schnee ein.

Potentielle Energie wird beim Bergabgleiten in kinetische Energie und verschiedene Energieverluste umgesetzt. Diese Energieverluste beinhalten im wesentlichen den Luftwiderstand, mechanische Verluste auf Grund der Pistenunebenheit, sowie entstehende Reibungswärme.

Fasst man die Erkenntnisse zusammen, so erkennt man, dass die Gleitreibung zwischen Schnee und Skibelag verschiedene, voneinander abhängige Auswirkungen hat. Einerseits wird durch äußere Reibung, die direkt zwischen Lauffläche und Schnee stattfindet, die Schneekristalle aufgeschmolzen und damit ein hydromechanisches Schmiermittel erzeugt, das den Reibungswiderstand des Gesamtsystems Lauffläche-Schnee beträchtlich herabsetzt, da in Folge die Lauffläche nicht mehr auf harten Schneekristallen gleitet, sondern eben auf diesem feinen Wasserfilm. Durch diesen gebildeten Wasserfilm kommt es allerdings zur Ausbildung einer inneren Reibung im Wasserfilm aufgrund der Zähigkeit des Wassers. Diese innere Reibung ist zwar im wesentlichen viel geringer als die äußere, es kann aber in Folge hoher Strömungsgeschwindigkeit zur Erzeugung von Unterdruck, wie auch zur Ausbildung von Turbulenzen im Wasserfilm kommen, die eine stark energieverzehrende und damit bremsende Wirkung haben.

Nicht vergessen werden darf auch der direkte mechanische Kontakt der Schneekristalle mit der Struktur der Lauffläche, bei dem es zu negativen Deformationserscheinungen der Kontaktmaterialien Lauffläche und Schnee kommen kann. Diese sind wiederum abhängig von der geometrischen Ausbildung der Laufflächenstruktur sowie von den elastischen Eigenschaften der eingesetzten Materialien.

Eine gesicherte Erklärung dieses sehr komplizierten Grenzflächenproblems ist noch nicht vorhanden. Tatsache aber ist, dass der Reibungskoeffizient wie die praktischen Tests ergeben um eine Zehnerpotenz niedriger ist als bei anderen kristallinen Werkstoffen.

Seit ca. 45 Jahren werden im modernen Skibau als Belagwerkstoff extrudiertes Polyethylen eingesetzt. Für Spitzenprodukte und im Rennlauf sind seit ca. 35 Jahren aber vor allem Skilaufflächen aus gesintertem, hochmolekularem Niederdruckpolyethylen im Einsatz. Um eine optimale Gleit- und Fahreigenschaft der Skier zu erzielen, müssen die Laufflächen (Stahlkante und Belag) geschliffen werden. Dabei werden derzeit zwei Verfahren eingesetzt:

### a) Bandschliff

Dabei handelt es sich um Schleifbänder, die bezüglich Band, Bindemittel, Schleifkorngröße und Art für die Bearbeitung der Skilauffläche optimiert wurden.

### b) Steinschliff

Beim Steinschliff handelt es sich um gebundene Schleifmittel, deren Einteilung nach verschiedenen Gesichtspunkten erfolgt: z.B. nach Verwendungszweck oder nach natürlichen (Glas, Bimsstein, Quarz, Granat, Korund, Diamant) oder künstlichen (Siliziumkarbid, Borkarbid, Kubisches Bornitrid, synthetischer Diamant) Rohstoffen, oder nach steigender Härte (1000 bis 7000 kp/mm² nach KNOOP) und nach der Korngröße (0 bis 5000*µ*m).

Die vielen Parameter wurden systematisch verändert und so die für die Skibearbeitung bestmögliche Kombination ermittelt. Die Schleifscheiben werden dann mit speziellen Werkzeugen (wie Diamanten, Hartmetallen, Keramik, etc.) abgerichtet und damit spezielle Laufflächen-Strukturen erreicht. In den letzten 15 Jahren ist jedoch keine nennenswerte Verbesserung der Bearbeitungsverfahren erzielt worden. Lediglich die Gleichmäßigkeit und Reproduzierbarkeit der Bearbeitung konnte durch den Einsatz computergesteuerter Maschinen verbessert werden.

Auf dem Belagsmaterialsektor konnte trotz intensiver Bemühungen kein besseres Material gefunden werden. Auf dem Schleifsektor besteht das Problem, dass sich die Schleifmittel (Band, Stein) abnützen (stumpf werden) und dadurch keine definierte und gleich bleibende Schleifstruktur erreicht werden kann. Ein optimal geschliffener Ski besteht aus einer Makrostruktur (<50*µ* und optisch sichtbar), einer Mikrostruktur (<10*µ* und nur unter dem Mikroskop sichtbar) und einer Nanostruktur (<1*µ* und nur mit hochauflösenden Messgeräten sichtbar). Die Makrostrukturierung ist beispielsweise in der AT 398038 B beschrieben. Die Makrostruktur wird beim Schleifen durch das Abziehen des Schleifsteins mit Diamanten erreicht. Durch unterschiedliche Einstellungen (Drehzahl, Vorschub, Form, Zustellung etc.) kann die Makrostruktur den Erfordernissen weitgehend angepasst werden. Die Mikrostruktur ist aber durch das Schleifen nicht kontrollierbar und hängt von einer Vielzahl von Faktoren ab. Dazu zählen die Werkstoffparameter (Material, Herstellungsverfahren etc.), die Schleifparameter (Steintyp, Abziehbedingungen, Schleifbedingungen, Schleifmaschine, etc.) und die Umweltbedingungen (Temperatur, Feuchtigkeit, Raum, etc.). Die praktisch erreichbaren Mikrostrukturen sind so stark unterschiedlich, dass Rennski für den Spitzensportbereich alle getestet werden müssen, weil gleich geschliffene Ski sich bei einem Abfahrtslauf um bis zu 2 Sekunden unterscheiden.

Mikrostrukturen können nicht nur durch Schleifen, sondern auch durch Prägeverfahren erhalten werden (siehe z.B. AT 410900 B und EP 1415686 A1). Eine Nanostruktur wird z.B. in WO 03/061783 A1 erwähnt. Ergänzend wird noch auf die AT 501251 A1 verwiesen, bei der zwar eine Relativbewegung zwischen einer profilierten Walze und der Gleitfläche eines Skis während der Bearbeitung offenbart wird; dort wird aber keine thermische Vorbehandlung der zu bearbeitenden Gleitfläche vorgesehen. Die vorliegende Erfindung zielt nun darauf ab ein verbessertes Bearbeitungsverfahren, sowie eine Vorrichtung zu schaffen, mit denen die oben genannten Nachteile zumindest teilweise beseitigt werden können. Insbesondere zielt die Erfindung darauf ab, eine wesentliche Verbesserung der Gleiteigenschaften von Gleitflächen zu erreichen, indem die Aufbringung der Makro-, der Mikro- und der Nanostruktur besser kontrolliert und den jeweiligen Vorgaben entsprechend eingestellt werden kann.

Zur Lösung dieser Aufgabe sieht die Erfindung ein Verfahren gemäss Anspruch 1 vor, dass die Gleitfläche auf eine eine plastische Verformung erlaubende Temperatur erwärmt wird und dass die erwärmte Gleitfläche mit einer rotierend angetriebenen walze bearbeitet wird, wobei die mit der Gleitfläche in Kontakt kommende zylindrische walzenoberfläche eine Relativgeschwindigkeit zur Gleitfläche aufweist. Dadurch, dass die Gleitfläche vor der mechanischen Bearbeitung auf eine eine plastische Verformung erlaubende Temperatur erwärmt wird, wird die Aufbringung einer definierten Makro-, Mikrostruktur und/oder Nanostruktur wesentlich vereinfacht, wobei insbesondere auch bei einer kontinuierlichen industriellen Fertigung gleichmäßige Strukturen erreicht werden können.

Die Walze hat vorzugsweise eine Breite, die mindestens der Breite der zu bearbeitenden Gleitfläche entspricht, sodass die gesamte Gleitflächenbreite auf einmal bearbeitet werden kann.

Erfindungsgemäß wird beispielsweise so vorgegangen, dass die aufgewärmte Gleitfläche des Gleitkörpers über eine bevorzugt gekühlte und angetriebene Walze gleitet bzw. geführt wird. Wenn die Walze hierbei mit einer definierten Mikrostruktur versehen ist, erhält die Gleitfläche eine Mikrostruktur. Wenn die Walze zusätzlich oder alternativ mit einer definierten Makrostruktur versehen ist, erhält die Gleitfläche (auch) eine Makrostruktur, was grundsätzlich zu erwarten war. Überaus überraschend ist es nun aber, dass es mit der erfindungsgemäßen Verfahrensweise möglich ist, die Gleitfläche unabhängig von der jeweiligen Strukturierung der Walzenoberfläche, also auch bei Verwendung einer glatten Walze, mit einer Nanostrukturierung zu versehen, wobei sich in praktischen Versuchen gezeigt hat, dass ein solcherart strukturierter Gleitbelag überragende Gleiteigenschaften aufweist. Obwohl die zugrunde liegenden Mechanismen nicht vollständig erforscht sind, liegt eine mögliche Theorie darin, dass auf Grund der unterschiedlichen Geschwindigkeiten von Gleitfläche und Walzenoberfläche im erwärmten Kunststoff (insbesondere Polyethylen) ein Spannungszustand auftritt, wodurch die Morphologie des Belages verändert wird. Wie aus der Literatur bekannt ist, besteht Polyethylen aus einem kristallinen und einem amorphen Anteil. Beide haben unterschiedliche physikalische Eigenschaften, die bei mechanischer Beanspruchung an den Korngrenzen Veränderungen im Nanobereich bewirken. Es ist davon auszugehen, dass diese Korngrenzen bei der erfindungsgemäßen Verfahrensweise definiert beeinflusst und dadurch die verbesserten Gleiteigenschaften erzielt werden. Zur Anpassung an die unterschiedlichen Schneebedingungen wie Neuschnee, Altschnee, Kunstschnee kalt oder warm, können die Prozessparameter wie Relativgeschwindigkeit, Anpressdruck, Temperatur entsprechend unterschiedlich ausgelegt werden.

Bevorzugt ist eine Verfahrensweise, bei der die Relativgeschwindigkeit zwischen 0,03 und 10m/s, bevorzugt zwischen 0,1 und 2m/s, bevorzugt zwischen 0,2 und 1 m/s beträgt. Die Relativgeschwindigkeit ergibt sich aus der Vorschubgeschwindigkeit der Gleitfläche und der Umfangsgeschwindigkeit der Walze. Die Vorschubgeschwindigkeit der Gleitfläche kann hierbei beispielsweise in Abhängigkeit von der gewünschten Erwärmung der Gleitfläche angepasst werden, wobei die Vorschubgeschwindigkeit bei schwerer zu erwärmenden Gleitflächen, z.B. bei hellen Materialien niedriger gewählt werden kann als bei dunklen Materialien. Die Umfangsgeschwindigkeit wird dann in Abhängigkeit von der jeweiligen Vorschubgeschwindigkeit so gewählt, dass sich die gewünschte Relativgeschwindigkeit ergibt.

Es ist bekannt, dass die Belastung eines Gleitkörpers, wie z.B. eines Skis beim Skifahren über die Länge des Skis unterschiedlich ist, wobei im Bereich der Skibindung in der Regel die größte Gewichtsbelastung beobachtet wird. Diesem Umstand kann mit der Erfindung in einfacher Weise dadurch Rechnung getragen werden, dass die Relativgeschwindigkeit über die Länge der Gleitfläche variiert wird, sodass die dem jeweiligen Belastungszustand und den sich daraus ergebenden Reibungsverhältnissen zwischen Gleitfläche und Schnee optimal entsprechende Strukturierung erreicht wird.

Eine weitere Möglichkeit der Beeinflussung der Strukturierung gelingt bei einer bevorzugten Verfahrensweise dadurch, dass die Gleitfläche auf eine Oberflächentemperatur von 30°C bis 200°C, bevorzugt 60°C bis 200°C, bevorzugt von 100°C bis 200°C erwärmt wird.

Eine besonders effiziente Strukturierung der Gleitfläche wird bevorzugt dadurch erreicht, dass die Walze während des Bearbeitens mit einem Anpressdruck von 1 bis 10 bar auf die Gleitfläche gedrückt wird. Dabei ist wiederum eine Anpassung in einfacher Weise möglich, wenn, wie dies einer bevorzugten Weiterbildung entspricht, der Anpressdruck über die Länge der Gleitfläche variiert wird.

Eine besonders verschleißfeste Ausbildung wird bevorzugt dadurch erreicht, dass die Walze wenigstens an ihrer Oberfläche aus einem Hartmetall besteht oder gehärtet wird.

Um zu verhindern, dass die Walzenoberfläche auf Grund des Anhaftens von weichem Kunststoff verklebt wird, wird bevorzugt so vorgegangen, dass die Walze gekühlt wird.

Um die Handhabung zu vereinfachen, ist bevorzugt vorgesehen, dass die Walze stationär gehalten und die Gleitfläche an der Walze vorbeibewegt wird. Dabei kann die Gleitfläche entweder entgegen der Rotationsrichtung der Walze vorbeibewegt werden oder in Rotationsrichtung.

Gemäß einem weiteren Aspekt der Erfindung ist zur Durchführung des erfindungsgemäßen Verfahrens eine Vorrichtung gemäss Anspruch 11 vorgesehen,
die einen mit einem Rotationsantrieb zusammenwirkenden, rotierend antreibbaren Bearbeitungswerkzeug aufweist, wobei das Bearbeitungswerkzeug von einer Walze gebildet ist, der Walze in Bearbeitungsrichtung vorauseilend eine Vorwärmeeinrichtung zum Vorwärmen der Gleitfläche auf eine eine plastische Verformung erlaubende Temperatur angeordnet ist und eine Führungs- und/oder Halteeinrichtung für die Gleiteinrichtung vorgesehen ist, um die Gleiteinrichtung derart zu führen bzw. zu halten, dass die Walzenoberfläche eine Relativgeschwindigkeit zur Gleitfläche aufweist.

Bevorzugte Weiterbildungen der erfindungsgemäßen Vorrichtung ergeben sich aus den Unteransprüchen.

Ein nicht erfindungsgemässer Aspekt betrifft eine Gleitfläche aus Kunststoff, insbesondere Polyethylen für Gleiteinrichtungen, wie z.B. Skier mit einer Strukturierung, wobei die Gleitfläche eine Nanostrukturierung aufweist. Die Nanostrukturierung kann hierbei wie bereits erwähnt bevorzugt durch eine Beeinflussung der Korngrenzen zwischen amorphen und kristallinen Bereichen des Kunststoffs gebildet sein. Zusätzlich weist die Gleitfläche bevorzugt wie an sich bekannt eine Mikro- und ggf. eine Makrostrukturierung auf.

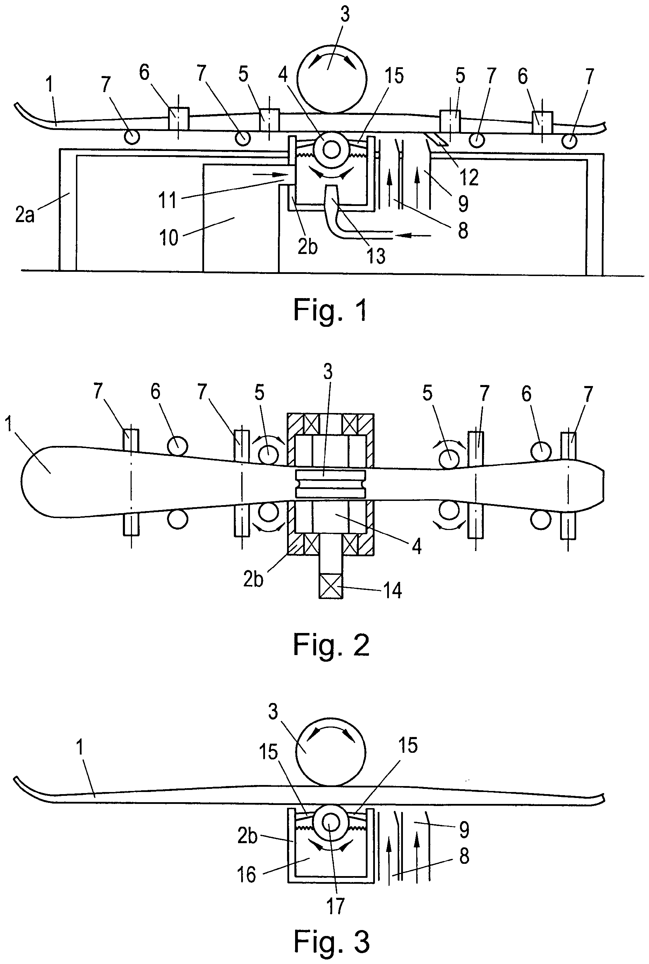

Die Erfindung wird nachfolgend anhand eines in der Zeichnung schematisch dargestellten Ausführungsbeispiels näher erläutert. In dieser zeigen Fig.1 eine Seitenansicht der erfindungsgemäßen Vorrichtung, Fig.2 eine Draufsicht auf die Vorrichtung gemäß Fig.1 und Fig.3 einen Ausschnitt einer abgewandelten Ausbildung In Fig. 1 ist mit 1 der zu bearbeitende Gegenstand, nämlich ein Ski bezeichnet, der eine spezielle Gleitflächenstruktur erhalten soll. Die Basis der Vorrichtung wird von einem Tisch 2a gebildet, der ein Gehäuse 2b aufweist, in dem eine Walze 4 drehbar gelagert ist. Die Walze 4 hat an ihrer Oberfläche eine Mikro- und ggf. eine Makrostrukturierung und ist so angeordnet, dass sie die die Gleitfläche aufweisende Unterseite des Ski 1 kontaktiert. Die Walze 4 wird mit Hilfe einer nicht dargestellten Antriebseinrichtung rotierend angetrieben. An der Oberseite des Ski 1 ist zur Erzeugung eines Anpressdrucks eine Walze 3 angeordnet. Die Walze 3 ist entweder frei drehbar gelagert oder ist als Vorschubwalze ausgebildet.

Mit 5 sind beispielsweise als Rollen ausgebildete Parallelführungen bezeichnet, die ebenfalls zum Vorschub in beide Richtungen dienen können. Weitere Führungselemente, insbesondere frei drehbare hinten und vorne angeordnete Führungsrollen sind mit 6 bezeichnet. Der Ski 1 liegt auf unteren Führungswalzen 7 auf.

Die Vorrichtung weist weiters eine gegen die Unterseite des Ski 1 gerichtete Wärmezufuhr 8 auf, wie beispielsweise Heißluft, Wärmestrahler, Gasbrenner oder dgl. Eine weitere Vorwärmung kann falls erforderlich mit Hilfe von Warmluft 9 erfolgen. Zur Kühlung der Walze 4 ist eine Kühleinrichtung 10 vorgesehen. Die Düse für Kaltluft ist mit 11 bezeichnet.

Wenn die zu behandelnde Gleitfläche gewachst ist, dient ein Wachsabstreifer 12 der Entfernung desselben. Mit 13 ist eine Düse für Druckluft zum Reinigen der angetriebenen Walze 4 bezeichnet. Zum Reinigen der Walze 4 ist weiters ein mit der Oberfläche der Walze 4 zusammenwirkender Schmutzabstreifer 15 vorgesehen.

In der Draufsicht gemäß Fig.2 sind die gleichen Teile mit denselben Bezugszeichen versehen, wobei die Lagerung der Walze 4 besser ersichtlich ist und weiters das dem Angriff des Rotationsantriebes dienende Ende der Welle der Walze 4 mit 14 bezeichnet ist.

Bei der abgewandelten Ausbildung gemäß Fig. 3 ist eine alternative, wirkungsvollere Kühlung der Walze 4 gezeigt. Die Walze 4 ist hier hohl ausgebildet und der Hohlraum 17 kann mit Kühlflüssigkeit durchströmt werden.

Die Bearbeitung der Gleitfläche erfolgt nun folgendermaßen. Der zu bearbeitende Ski 1 wird durch die Führungsrollen 5, 6 und 7 geführt unter die Druckwalze 3 gebracht und auf die rotierende Walze 4 gedrückt. Der Anpressdruck liegt zwischen 1 bis 10 bar.

Die Bewegung des Ski 1 erfolgt mit den Führungsrollen 5 und/oder mit der Druckwalze 3. Die Drehrichtung ist in beide Richtungen möglich. Die Bewegung des Ski 1 kann aber auch durch eine gesonderte Linienführung wie z.B. bei einer Drehbank oder einem Seilzug erfolgen. Der Ski 1 wird vor der rotierenden Walze 4 mit Hilfe der Wärmeinrichtung 8 erwärmt, wozu sich Gasbrenner, Wärmestrahler, Heißluft etc. eignet. Falls erforderlich wird noch eine oder mehrere Vorwärmstationen 9 dazugeschaltet. Die rotierende Walze 4 besitzt an der Oberfläche eine Mikrorauhigkeit (eventuell auch eine Makrorauhigkeit) mit der dann die Gleitfläche des Gleitkörpers bearbeitet wird.

Die Makrostruktur, vorteilhaft zwischen 10*µ* und 50*µ* verläuft vorteilhaft in Längsrichtung, die Mikro- und Nanostruktur zwischen 0*µ* und 10*µ* vorteilhaft quer zur Bewegungsrichtung. Die genaue Form der Makro-, Mikro- und Nanostruktur ist je nach Einsatzgebiet unterschiedlich und muss durch praktische Versuche oder Berechnungen für jedes Einsatzgebiet speziell ermittelt werden (z.B. auf Skier bezogen für normalen Schnee, kalten Schnee, Neuschnee, Kunstschnee etc.).

Die Herstellung der unterschiedlichen Strukturen der rotierenden Walze 4 kann mechanisch durch Drehen, Fräsen, Eindrücken etc., durch Beizen, lithographisch, durch Lasertechnik oder wasserstrahlbearbeitung erfolgen. Vorteilhaft ist es, die rotierende walze 4 verschleißfest auszuführen (Hartmetall, gehärteten Stahl etc.), damit kein oder nur geringer Verschleiß im Dauereinsatz auftritt. Die rotierende walze 4 muss im Dauerbetrieb gegen zu hohe Erwärmung gekühlt werden. Dies geschieht z.B. durch eine Kühleinrichtung 10 mit Düse 11, oder man kühlt die rotierende Walze 4 mit Wasser 16. Die Walze 4 kann entweder in gekühltes Medium, insbesondere Wasser 16 eingetaucht werden oder man lässt das Wasser durch die Walze 4 strömen.

Über die Länge des Ski 1 kann sowohl der Druck, als auch die Vorschubgeschwindigkeit variabel eingestellt werden. Sowohl Rechts- als auch Linkslauf sind möglich.

Die Erfindung eignet sich nicht nur für die Strukturierung von Gleitflächen für neue Skier bei deren Herstellung, sondern hervorragend auch für die Reparatur von gebrauchten Skiern bei denen der Gleitbelag beschädigt ist. Dabei ist hervorzuheben, dass durch die Erfindung auch besonders tiefe Kratzer oder dgl. im Gleitbelag mühelos repariert werden können. Auf Grund des Erwärmens des Belags auf eine eine plastische Verformung erlaubende Temperatur wird bei der erfindungsgemäßen Bearbeitung Material aus Bereichen um den jeweiligen Kratzer herum in die Vertiefung gedrückt, so dass tiefe Kratzer nach einigen Durchgängen nahezu vollständig mit Belagsmaterial aufgefüllt sind.

Außerdem kann mit der Erfindung nach kurzer Einschulungszeit auch eine ungelernte Arbeitskraft schnelle Gleitflächen herstellen.

## Patentansprüche

1. Verfahren zum Bearbeiten einer Kunststoff- insbesondere Polyethylengleitfläche von Gleiteinrichtungen, wie z.B. Skiern, mit einem rotierend antreibbaren Bearbeitungswerkzeug, **dadurch gekennzeichnet, dass** die Gleitfläche auf eine eine plastische Verformung erlaubende Temperatur erwärmt wird und dass die erwärmte Gleitfläche mit einer rotierend angetriebenen Walze bearbeitet wird, wobei die mit der Gleitfläche in Kontakt kommende zylindrische Walzenoberfläche eine Relativgeschwindigkeit zur Gleitfläche aufweist.

2. Verfahren nach Anspruch 1, **dadurch gekennzeichnet, dass** die Relativgeschwindigkeit zwischen 0,03 und 10m/s, bevorzugt zwischen 0,1 und 2m/s, bevorzugt zwischen 0,2 und 1 m/s beträgt.

3. verfahren nach Anspruch 1 oder 2, **dadurch gekennzeichnet, dass** die Relativgeschwindigkeit über die Länge der Gleitfläche variiert wird.

4. Verfahren nach Anspruch 1, 2 oder 3, **dadurch gekennzeichnet, dass** die Gleitfläche auf eine Oberflächentemperatur von 30°C bis 200°C, bevorzugt 60°C bis 200°C, bevorzugt von 100°C bis 200°C erwärmt wird.

5. Verfahren nach einem der Ansprüche 1 bis 4, **dadurch gekennzeichnet, dass** die Walze während des Bearbeitens mit einem Anpressdruck von 1 bis 10 bar auf die Gleitfläche gedrückt wird.

6. verfahren nach Anspruch 5, **dadurch gekennzeichnet, dass** der Anpressdruck über die Länge der Gleitfläche variiert wird.

7. Verfahren nach einem der Ansprüche 1 bis 6, **dadurch gekennzeichnet, dass** die Walze eine strukturierte Oberfläche aufweist.

8. verfahren nach einem der Ansprüche 1 bis 7, **dadurch gekennzeichnet, dass** die Walze wenigstens an ihrer Oberfläche aus einem Hartmetall besteht.

9. Verfahren nach einem der Ansprüche 1 bis 8, **dadurch gekennzeichnet, dass** die Walze gekühlt wird.

10. Verfahren nach einem der Ansprüche 1 bis 9, **dadurch gekennzeichnet, dass** die Walze stationär gehalten und die Gleitfläche an der Walze vorbeibewegt wird.

11. Vorrichtung zum Bearbeiten einer Kunststoff- insbesondere Polyethylengleitfläche von Gleiteinrichtungen, wie z.B. Skiern zur Durchführung des Verfahrens nach einem der Ansprüche 1 bis 10, mit einem mit einem Rotationsantrieb zusammenwirkenden, rotierend antreibbaren Bearbeitungswerkzeug, **dadurch gekennzeichnet, dass** das Bearbeitungswerkzeug von einer Walze (4) gebildet ist, dass der Walze (4) in Bearbeitungsrichtung vorauseilend eine Vorwärmeeinrichtung zum Vorwärmen der Gleitfläche auf eine eine plastische Verformung erlaubende Temperatur angeordnet ist und dass eine Führungs- und/oder Halteeinrichtung für die Gleiteinrichtung (1) vorgesehen ist, um die Gleiteinrichtung (1) derart zu führen bzw. zu halten, dass die Walzenoberfläche eine Relativgeschwindigkeit zur Gleitfläche aufweist.

12. Vorrichtung nach Anspruch 11, **dadurch gekennzeichnet, dass** die Walze (4) zur Ausbildung einer Mikro- und/oder Makrostruktur eine strukturierte Oberfläche aufweist.

13. Vorrichtung nach Anspruch 11 oder 12, **dadurch gekennzeichnet, dass** der Rotationsantrieb zur Einstellung verschiedener Rotationsgeschwindigkeiten der Walze (4) regelbar ist.

14. Vorrichtung nach einem der Ansprüche 11 bis 13, **dadurch gekennzeichnet, dass** die Walze (4) mit einer Andrückeinrichtung (3) zusammenwirkt, um die Walze (4) während des Bearbeitens mit einem Anpressdruck von bevorzugt 1 bis 10 bar auf die Gleitfläche zu drücken.

15. Vorrichtung nach Anspruch 14, **dadurch gekennzeichnet, dass** die Andrückeinrichtung (3) zum Variieren des Anpressdrucks über die Länge der Gleitfläche ausgebildet ist.

16. Vorrichtung nach einem der Ansprüche 11 bis 15, **dadurch gekennzeichnet, dass** der Walze (4) eine Kühleinrichtung (10) zum Kühlen der Walze (4) zugeordnet ist.

17. Vorrichtung nach einem der Ansprüche 11 bis 16, **dadurch gekennzeichnet, dass** der Walze (4) eine Reinigungseinrichtung (13) zum Reinigen der Walze (4) während des Betriebes zugeordnet ist.

## Claims

1. A method for machining a plastic sliding surface, in particular a polyethylene sliding surface, of sliding devices such as skis, with a rotationally drivable machining tool, **characterized in that** the sliding surface is heated to a temperature allowing plastic deformation, and that the heated sliding surface is machined with a rotationally driven roller, wherein the cylindrical roller surface contacting the sliding surface comprises a relative speed relative to the sliding surface.

2. A method according to claim 1, **characterized in that** the relative speed ranges between 0.03 and 10 m/s, preferably between 0.1 and 2 m/s, preferably between 0.2 and 1 m/s.

3. A method according to claim 1 or 2, **characterized in that** the relative speed is varied over the length of the sliding surface.

4. A method according to claim 1, 2 or 3, **characterized in that** the sliding surface is heated to a surface temperature of 30°C to 200°C, preferably 60°C to 200°C, preferably 100°C to 200°C.

5. A method according to any one of claims 1 to 4, **characterized in that** the roller is pressed against the sliding surface at a contact pressure of 1 to 10 bar during machining.

6. A method according to claim 5, **characterized in that** the contact pressure is varied over the length of the sliding surface.

7. A method according to any one of claims 1 to 6, **characterized in that** the roller comprises a structured surface.

8. A method according to any one of claims 1 to 7, **characterized in that** the roller is comprised of a hard metal, at least on its surface.

9. A method according to any one of claims 1 to 8, **characterized in that** the roller is cooled.

10. A method according to any one of claims 1 to 9, **characterized in that** the roller is stationarily held and the sliding surface is moved past the roller.

11. A device for machining a plastic sliding surface, in particular a polyethylene sliding surface, of sliding devices such as skis, for carrying out the method according to any one of claims 1 to 10, with a rotationally drivable machining tool cooperating with a rotary drive, **characterized in that** the machining tool is comprised of a roller (4), that the roller (4) is preceded by a heating device, viewed in the machining direction, for heating the sliding surface to a temperature allowing plastic deformation, and that a guiding and/or holding device is provided for the sliding device (1) for guiding and/or holding the sliding device (1) in such a manner that the roller surface comprises a relative speed relative to the sliding surface.

12. A device according to claim 11, **characterized in that** the roller (4) comprises a structured surface for forming a microstructure and/or a macrostructure.

13. A device according to claim 11 or 12, **characterized in that** the rotary drive is controllable for setting different rotational speeds of the roller (4).

14. A device according to any one of claims 11 to 13, **characterized in that** the roller (4) cooperates with a pressing device (3) to press the roller (4) against the sliding surface at a contact pressure of preferably 1 to 10 bar during machining.

15. A device according to claim 14, **characterized in that** the pressing device (3) is configured to vary the contact pressure over the length of the sliding surface.

16. A device according to any one of claims 11 to 15, **characterized in that** the roller (4) is associated with a cooling device (10) for cooling the roller (4).

17. A device according to any one of claims 11 to 16, **characterized in that** the roller (4) is associated with a cleaning device (13) for cleaning the roller (4) during operation.

## Revendications

1. Procédé de traitement d'une surface de glissement plastique, notamment d'une surface de glissement en polyéthylène de dispositifs de glissement, comme par exemple des skis, avec un outil de traitement pouvant être entraîné en rotation, **caractérisé en ce que** la surface de glissement est chauffée à une température permettant une déformation plastique et **en ce que** la surface de glissement chauffée est traitée avec un rouleau entraîné en rotation, dans lequel la surface de rouleau cylindrique qui vient en contact avec la surface de glissement présente une vitesse relative par rapport à la surface de glissement.

2. Procédé selon la revendication 1, **caractérisé en ce que** la vitesse relative se situe entre 0,03 et 10 m/s, de préférence entre 0,1 et 2 m/s, de préférence entre 0,2 et 1 m/s.

3. Procédé selon la revendication 1 ou 2, **caractérisé en ce que** la vitesse relative est modifiée sur la longueur de la surface de glissement.

4. Procédé selon la revendication 1, 2 ou 3, **caractérisé en ce que** la surface de glissement est chauffée à une température de surface de 30 °C à 20 °C, de préférence de 60 °C à 200 °C, de préférence de 100 °C à 200 °C.

5. Procédé selon l'une quelconque des revendications 1 à 4, **caractérisé en ce que**, pendant le traitement, le rouleau est pressé avec une pression d'appui de 1 à 10 bar sur la surface de glissement.

6. Procédé selon la revendication 5, **caractérisé en ce que** la pression d'appui est modifiée sur la longueur de la surface de glissement.

7. Procédé selon l'une quelconque des revendications 1 à 6, **caractérisé en ce que** le rouleau présente une surface structurée.

8. Procédé selon l'une quelconque des revendications 1 à 7, **caractérisé en ce que** le rouleau se compose d'un métal dur au moins au niveau de sa surface.

9. Procédé selon l'une quelconque des revendications 1 à 8, **caractérisé en ce que** le rouleau est refroidi.

10. Procédé selon l'une quelconque des revendications 1 à 9, **caractérisé en ce que** le rouleau est maintenu de manière stationnaire et la surface de glissement est déplacée devant le rouleau.

11. Dispositif de traitement d'une surface de glissement plastique, notamment d'une surface de glissement en polyéthylène de dispositifs de glissement, comme par exemple des skis, pour la mise en oeuvre du procédé selon l'une quelconque des revendications 1 à 10, avec un outil de traitement coopérant avec un dispositif d'entraînement en rotation et pouvant être entraîné en rotation, **caractérisé en ce que** l'outil de traitement est formé par un rouleau (4), **en ce qu'**un dispositif de préchauffage pour préchauffer la surface de glissement à une température permettant une déformation plastique est agencé devant le rouleau (4) dans la direction de traitement et **en ce qu'**un dispositif de guidage et/ou de maintien est prévu pour le dispositif de glissement (1) afin de guider ou de maintenir le dispositif de glissement de manière à ce que la surface de rouleau présente une vitesse relative par rapport à la surface de glissement.

12. Dispositif selon la revendication 11, **caractérisé en ce que** le rouleau (4) présente une surface structurée pour la formation d'une microstructure et/ou d'une macrostructure.

13. Dispositif selon la revendication 11 ou 12, **caractérisé en ce que** le dispositif d'entraînement en rotation peut être réglé afin d'ajuster différentes vitesses de rotation du rouleau (4).

14. Dispositif selon l'une quelconque des revendications 11 à 13, **caractérisé en ce que** le rouleau (4) coopère avec un dispositif de pression (3) afin de presser le rouleau (4) avec une pression d'appui de préférence de 1 à 10 bar sur la surface de glissement pendant le traitement.

15. Dispositif selon la revendication 14, **caractérisé en ce que** le dispositif de pression (3) est conçu pour modifier la pression d'appui sur la longueur de la surface de glissement.

16. Dispositif selon l'une quelconque des revendications 11 à 15, **caractérisé en ce qu'**un dispositif de refroidissement (10) est associé au rouleau (4) afin de refroidir le rouleau (4).

17. Dispositif selon l'une quelconque des revendications 11 à 16, **caractérisé en ce qu'**un dispositif de nettoyage (13) est associé au rouleau (4) afin de nettoyer le rouleau (4) pendant le fonctionnement.
